Europäisches Patentamt

European Patent Office

Office européen des brevets

(19)

(11) **EP 0 717 264 B1**

(12) **FASCICULE DE BREVET EUROPEEN**

(45) Date de publication et mention
de la délivrance du brevet:
**28.07.1999 Bulletin 1999/30**

(51) Int Cl.⁶: **G01C 25/00**, G01C 21/16

(21) Numéro de dépôt: **95402600.1**

(22) Date de dépôt: **20.11.1995**

(54) **Procédé et dispositif pour estimer des biais gyrométriques**

Verfahren und Vorrichtung zum Schätzen von gyrometrischen Nullpunktabweichungen

Procedure and device for estimating gyrometric biases

(84) Etats contractants désignés:
**BE CH DE ES GB GR IT LI NL SE**

(30) Priorité: **14.12.1994 FR 9415050**

(43) Date de publication de la demande:
**19.06.1996 Bulletin 1996/25**

(73) Titulaire: **AEROSPATIALE SOCIETE NATIONALE
INDUSTRIELLE**
**75016 Paris (FR)**

(72) Inventeur: **Naccache, Frédéric**
**F-91550 Parray-Vieille-Poste (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 292 339**

- **P.H.SAVET(ED.) 'Gyroscopes: Theory and
  design' 1961 , MCGRAW-HILL , NEW YORK *
  page 361, ligne 37 - page 363, ligne 20 ***
- **SOVIET INVENTIONS ILLUSTRATED Week 8138
  28 Octobre 1981 Derwent Publications Ltd.,
  London, GB; AN 81-J8275D & SU-A-783 587
  (ULYANOV P I) , 1 Décembre 1980**
- **PROCEEDINGS OF THE IEEE 1984 NATIONAL
  AEROSPACE AND ELECTRONICS
  CONFERENCE. NAECON 1984 (IEEE CAT. NO.
  84CH2029-7), DAYTON, OH, USA, 21-25 MAY
  1984, 1984, NEW YORK, NY, USA, IEEE, USA,
  pages 315-322 vol.1, DIVAKARUNI S P ET AL
  'Fast reaction and high reliability of strapdown
  navigation systems using ring laser gyros'**
- **CONTROL ENGINEERING, vol. 9, no. 5, NEW
  YORK US, pages 85-88, SHU LEE 'AUTOMATIC
  GYRO TRIMMING DURING PLATFORM
  ALIGNMENT'**

**Description**

La présente invention concerne un procédé pour estimer les biais gyrométriques de mesures effectuées par au moins un gyromètre monté sur un aéronef, ainsi qu'un dispositif pour la mise en oeuvre de ce procédé.

Dans le cadre de la présente invention, on entend par biais des erreurs de mesure d'un capteur apparaissant lors de chaque mesure et dues par exemple à un mauvais étalonnage ou à un défaut de précision dudit capteur, et donc par biais gyrométriques on entend des erreurs de mesure ainsi définies d'un gyromètre.

Bien que non exclusivement, la présente invention sera plus particulièrement appropriée à être mise en oeuvre sur des missiles lancés à partir du sol et munis d'une centrale inertielle. De façon connue, une telle centrale inertielle est pourvue de capteurs, à savoir essentiellement des accéléromètres et des gyromètres, destinés à effectuer des mesures utilisées par ladite centrale inertielle, en particulier pour déterminer la position du missile en vol. En raison de l'imperfection de ces capteurs entraînant l'apparition de biais dans les mesures effectuées, la position du missile estimée par la centrale inertielle diffère, rapidement après le lancement du missile, de la position effective. Il est alors nécessaire, si on veut éviter un échec de la mission du missile, d'effectuer un recalage de la position dudit missile. Or, un tel recalage est généralement difficile à mettre en oeuvre et de plus très coûteux.

Une solution pour éviter d'avoir à effectuer un tel recalage est d'utiliser des capteurs à très haute performance, dont les éventuels biais sont négligeables. Ceci concerne surtout les gyromètres, puisque les biais gyrométriques entraînent les erreurs les plus importantes dans l'estimation de la position du missile. Toutefois, de tels gyromètres à très haute performance sont extrêmement coûteux, de sorte que cette solution n'est guère envisageable, surtout pour des aéronefs ou des missiles munis d'une centrale inertielle de faible coût.

La présente invention a pour objet de remédier à ces inconvénients. Elle concerne un procédé pour estimer les biais gyrométriques de mesures effectuées par un ensemble de gyromètres comportant au moins un gyromètre et monté sur un aéronef.

A cette fin, selon l'invention, ledit procédé est remarquable en ce que :

- on immobilise ledit aéronef en un endroit déterminé sur la terre ;
- on détermine les angles d'assiette, de roulis et de cap dudit aéronef ainsi immobilisé ;
- on détermine la latitude dudit endroit déterminé ;
- on calcule, à partir de ladite latitude et desdits angles d'assiette, de roulis et de cap, la vitesse de rotation de la terre dans un référentiel de mesure lié audit aéronef ;
- on mesure la vitesse de rotation de la terre dans ledit référentiel de mesure au moyen dudit ensemble de gyromètres ; et
- on effectue la soustraction entre la vitesse de rotation calculée et la vitesse de rotation mesurée, de manière à obtenir les valeurs estimées desdits biais gyrométriques.

Ainsi, grâce à l'invention, on est en mesure de déterminer les biais gyrométriques de mesures effectuées par des gyromètres, ce qui permet de corriger lesdites mesures de manière à obtenir des valeurs gyrométriques extrêmement précises. Par conséquent, on peut utiliser des gyromètres de performance moyenne, et donc de faible coût, tout en obtenant des résultats très précis (après la correction des biais gyrométriques déterminés par le procédé conforme à l'invention).

La présente invention est donc particulièrement appropriée à être mise en oeuvre sur des aéronefs comportant des centrales inertielles de faible coût ou sur des aéronefs, en particulier des missiles, à longue portée présentant un temps de vol et une distance de vol élevés puisque, dans ce dernier cas, même si l'aéronef est muni d'une centrale inertielle très performante, une légère erreur dans les mesures gyrométriques qui doivent être répétées sur une longue durée peut provoquer une erreur importante, par exemple dans l'estimation de la position de l'aéronef, ce qui peut entraîner des conséquences très dommageables. Or, grâce à l'invention, de telles erreurs préjudiciables, même si elles ne sont que minimes, peuvent être facilement corrigées.

Avantageusement, les angles d'assiette et de roulis sont déterminés à partir de mesures accélérométriques effectuées sur l'aéronef, de préférence au moyen d'accéléromètres de la centrale inertielle de l'aéronef.

Dans le cas où le référentiel de mesure correspond à un référentiel OXYZ dans lequel :

- l'axe OX correspond à l'axe de l'aéronef,
- l'axe OY est perpendiculaire audit axe OX suivant les ailes dudit aéronef, et
- l'axe OZ est perpendiculaire auxdits axes OX et OY,

on détermine de façon avantageuse les angles d'assiette $\Theta$ et de roulis $\phi$ à partir d'au moins deux des trois relations suivantes :

$$\Gamma x = -g.\sin\Theta.(1+fx)$$

$$\Gamma y = g.\cos\Theta.\sin\phi.(1+fy)$$

$$\Gamma z = g.\cos\Theta.\cos\phi.(1+fz)$$

dans lesquelles :

- $\Gamma x$, $\Gamma y$ et $\Gamma z$ représentent des mesures accélérométriques effectuées par des accéléromètres respectivement selon les axes OX, OY et OZ,
- g représente l'accélération de la pesanteur, et
- fx, fy et fz représentent des facteurs d'échelle desdits accéléromètres, correspondant à une erreur multiplicative à la différence des biais qui correspondent à une erreur additionnelle.

On notera que l'angle de cap ne peut pas être déterminé à partir des mesures accélérométriques précisées précédemment puisqu'il est défini dans un plan qui est perpendiculaire à l'accélération de la pesanteur.

Aussi, de préférence, on détermine ledit angle de cap à partir de mesures effectuées par un moyen de mesure approprié externe à la centrale inertielle de l'aéronef, ce qui permet de plus d'utiliser un moyen de mesure non embarqué à bord de l'aéronef et pouvant être réutilisé ultérieurement.

En outre, de façon avantageuse, on calcule la vitesse de rotation $\omega_{cal}$ de la terre dans le référentiel de mesure à partir de la relation :

$$\omega_{cal} = \begin{pmatrix} \cos\Theta.\cos\psi.\omega.\cos\lambda + \sin\Theta.\omega.\sin\lambda \\ (\cos\psi.\sin\Theta.\sin\phi - \sin\psi.\cos\phi).\omega.\cos\lambda - \cos\Theta.\sin\phi.\omega.\sin\lambda \\ (\cos\phi.\sin\Theta.\cos\psi + \sin\phi.\sin\psi).\omega.\cos\lambda - \cos\phi.\cos\Theta.\omega.\sin\lambda \end{pmatrix}$$

dans laquelle :

- $\lambda$ correspond à la latitude dudit point déterminé,
- $\Theta$, $\phi$ et $\psi$ représentent respectivement les angles d'assiette, de roulis et de cap, et
- $\omega$ représente la vitesse de rotation de la terre autour de son axe de rotation.

Par ailleurs, avantageusement, ledit aéronef, par exemple un missile, est immobilisé pour la mise en oeuvre de l'invention à son poste de lancement, ce qui permet de déterminer les biais gyrométriques juste avant le lancement après la mise en service des capteurs nécessaires à cette mise en oeuvre.

La présente invention concerne également un dispositif associé audit ensemble de gyromètres comportant au moins un gyromètre et monté sur l'aéronef, pour la mise en oeuvre du procédé précité.

Le dispositif conforme à l'invention est associé à un système auxiliaire susceptible de déterminer les angles d'assiette et de roulis de l'aéronef, et comporte :

- un premier moyen de mesure déterminant la latitude dudit endroit déterminé de la terre ;
- un second moyen de mesure déterminant l'angle de cap dudit aéronef ;
- un premier calculateur calculant la vitesse de rotation de la terre à partir d'informations reçues dudit système auxiliaire et desdits premier et second moyens de mesure ; et
- un second calculateur déterminant les biais gyrométriques à partir d'informations reçues dudit premier calculateur et dudit ensemble de gyromètres.

De façon avantageuse, ledit système auxiliaire et ledit ensemble de gyromètres font partie de la centrale inertielle de l'aéronef.

De plus, lesdits premier et second calculateurs sont regroupés de préférence dans un calculateur unique.

Par ailleurs, les valeurs des biais gyrométriques estimées par ledit dispositif peuvent être stockées avantageusement dans une mémoire intégrée dans ladite centrale inertielle, ce qui permet à ladite centrale inertielle de

EP 0 717 264 B1

corriger directement les mesures gyrométriques ultérieures effectuées par ledit ensemble de gyromètres.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre de façon schématique dans un plan vertical la position initiale immobile de l'aéronef.

La figure 3 illustre schématiquement dans un plan horizontal la position de la figure 2.

La figure 4 illustre un référentiel utilisé pour la mise en oeuvre de l'invention et défini par rapport à la terre.

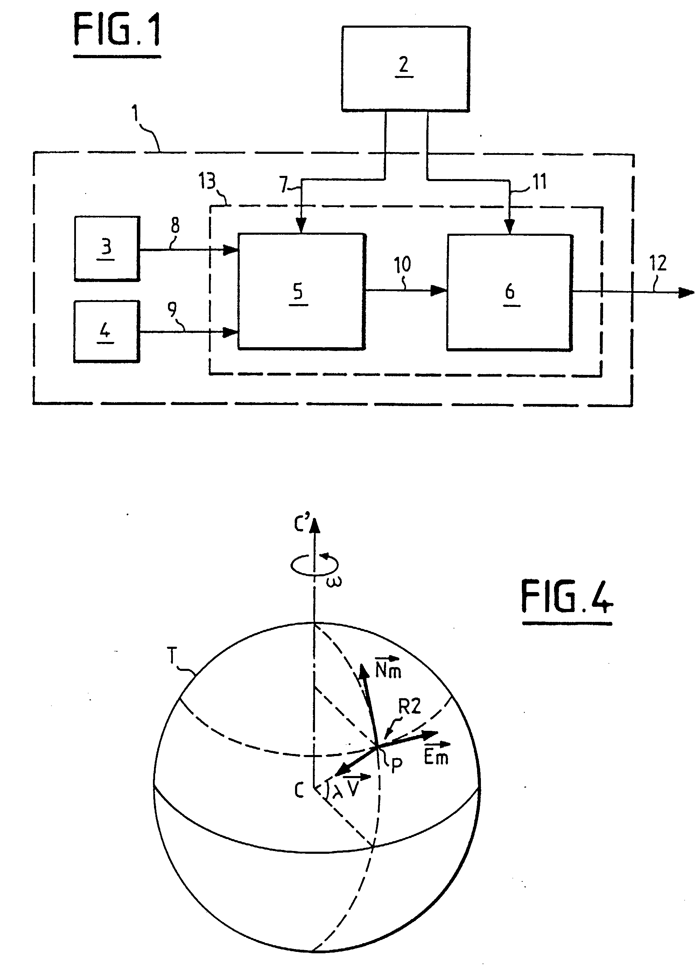

Le dispositif 1 conforme à l'invention et représenté schématiquement sur la figure 1 est destiné à estimer les biais gyrométriques de mesures effectuées par des gyromètres d'un ensemble de gyromètres non représenté et faisant partie de la centrale inertielle 2 d'un aéronef A, en particulier un missile.

On sait que les biais gyrométriques correspondent à des erreurs concernant les mesures gyrométriques, dues par exemple à un défaut d'étalonnage des gyromètres et apparaissant lors de chaque mesure. De tels biais gyrométriques entraînent des erreurs dans les calculs effectués à partir de ces mesures par la centrale inertielle 2, ce qui peut évidemment entraîner des conséquences très dommageables, en particulier un échec de la mission à effectuer.

La présente invention a pour objet d'estimer ces biais gyrométriques afin de pouvoir les corriger dans les mesures effectuées par les gyromètres, lesdites mesures gyrométriques correspondant de façon connue à des mesures de vitesses angulaires.

A cet effet, selon l'invention, on immobilise ledit aéronef A par rapport à la terre T, par exemple sur une rampe ou un tube de lancement non représentée, de manière que ledit aéronef A ne soit soumis qu'à la rotation de la terre T.

A partir d'une telle position immobile, on détermine les biais gyrométriques en effectuant, conformément à l'invention, et de préférence juste avant le lancement de l'aéronef A, les opérations suivantes :

- on calcule la vitesse de rotation $\omega_{cal}$ de la terre T dans un référentiel de mesure R1 lié à l'aéronef A et décrit ci-après ;
- on mesure, à l'aide des gyromètres de ladite centrale inertielle 2, la vitesse de rotation $\omega_{mes}$ de la terre T dans ledit référentiel de mesure R1 ; et
- on effectue la soustraction entre la vitesse de rotation calculée $\omega_{cal}$ et la vitesse de rotation mesurée $\omega_{mes}$, de manière à obtenir les valeurs estimées desdits biais gyrométriques.

Ledit référentiel de mesure R1 est formé d'axes OX, OY et OZ tels que :

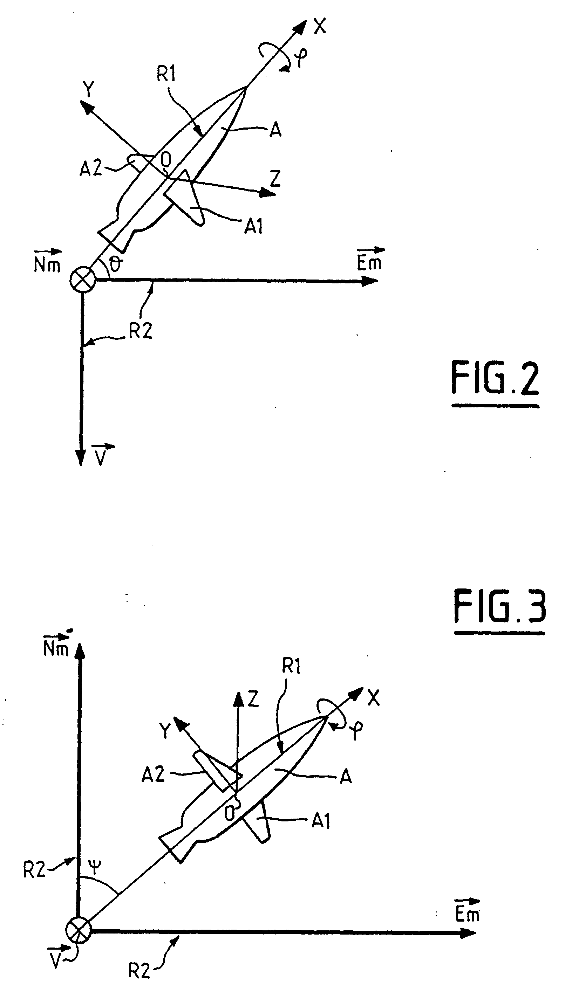

- l'axe OX correspond à l'axe de l'aéronef A ;
- l'axe OY est perpendiculaire audit axe OX suivant les ailes A1 et A2 dudit aéronef A ; et
- l'axe OZ est perpendiculaire à OX et à OY, tel que représenté sur les figures 2 et 3.

Selon l'invention, pour calculer la vitesse de rotation de la terre T, on définit un référentiel de base R2 représenté sur la figure 4 et défini par trois axes $\vec{V}$, $\overrightarrow{Nm}$ et $\overrightarrow{Em}$ tels que :

- $\vec{V}$ est un axe parallèle au gradient du champ de gravité terrestre non représenté, orienté vers le centre C de la terre T, et donnant la verticale locale ;
- $\overrightarrow{Nm}$ est un axe horizontal donnant le nord magnétique ; et
- $\overrightarrow{Em}$ est un axe horizontal donnant l'est magnétique.

Sur la figure 4, on a représenté le référentiel de base R2 en un point P correspondant à l'endroit du globe terrestre T où se trouve l'aéronef A au moment des mesures. La latitude de ce point P est désignée par $\lambda$.

Par ailleurs, on sait que la terre T tourne autour de son axe de rotation CC' à une vitesse $\omega$, avec $\omega = 15°$ par heure.

Aussi, dans ledit référentiel de base R2, la vitesse de rotation $\omega 1$ de la terre T s'écrit :

$$\omega 1 \quad = \quad \begin{pmatrix} \omega \cdot \cos\lambda \\ 0 \\ -\omega \cdot \sin\lambda \end{pmatrix}$$

On peut déduire de cette expression la vitesse de rotation $\omega_{cal}$ de la terre T dans le référentiel de mesure R1, à partir de la relation :

$$\omega_{cal} = M.\omega 1$$

M étant la matrice de passage dudit référentiel de base R2 audit référentiel de mesure R1.

De façon connue, la matrice M s'écrit :

$$M = \begin{pmatrix} \cos\Theta.\cos\psi & | \ \cos\Theta.\sin\psi & | \ -\sin\Theta \\ \cos\psi.\sin\Theta.\sin\phi-\sin\psi.\cos\phi & | \ \sin\psi.\sin\Theta.\sin\phi+\cos\psi.\cos\phi & | \ \cos\Theta.\sin\phi \\ \cos\phi.\sin\Theta.\cos\psi+\sin\phi.\sin\psi & | \ \cos\phi.\sin\Theta.\sin\psi-\sin\phi.\cos\psi & | \ \cos\phi.\cos\Theta \end{pmatrix}$$

avec :

- $\Theta$ l'angle d'assiette de l'aéronef A, correspondant à l'angle entre l'axe OX dudit aéronef A et le plan horizontal défini par les axes $\overrightarrow{Em}$ et $\overrightarrow{Nm}$, tel que représenté sur la figure 2 ;
- $\phi$ l'angle de roulis de l'aéronef A ; et
- $\psi$ l'angle de cap, c'est-à-dire l'angle par rapport à la direction $\overrightarrow{Nm}$ indiquant le Nord de la projection de l'axe OX sur le plan horizontal formé des axes $\overrightarrow{Nm}$ et $\overrightarrow{Em}$, comme représenté sur la figure 3.

Dans le cas d'un missile lancé à partir du sol au moyen d'une rampe de lancement non représentée, l'angle d'assiette $\Theta$ correspond à l'angle entre cette rampe de lancement et le plan horizontal $(\overrightarrow{Nm}, \overrightarrow{Em})$ lorsque l'axe OX de l'aéronef est parallèle au plan de lancement de ladite rampe.

Selon l'invention, les angles $\Theta$ et $\phi$ sont déterminés à partir de mesures accélérométriques $\Gamma x$, $\Gamma y$ et $\Gamma z$ effectuées par des accéléromètres non représentés de la centrale inertielle 2, respectivement suivant les axes OX, OY et OZ.

De façon connue, ces mesures accélérométriques vérifient les relations suivantes :

$$\Gamma x = -g.\sin\Theta.(1+fx)$$

$$\Gamma y = g.\cos\Theta.\sin\phi.(1+fy)$$

$$\Gamma z = g.\cos\Theta.\cos\phi.(1+fz)$$

dans lesquelles :

- fx, fy et fz représentent des facteurs d'échelle desdits accéléromètres, et
- g correspond à l'accélération de la pesanteur.

On remarquera que ces mesures $\Gamma x$, $\Gamma y$ et $\Gamma z$ peuvent éventuellement être corrigées par des biais accélérométriques si ces derniers sont connus.

On notera de plus que, pour l'ensemble des mesures à la fois accélérométriques et gyrométriques effectuées lors de la mise en oeuvre de la présente invention, on réalise de préférence un filtrage de ces mesures, par exemple pendant quelques secondes, pour s'affranchir d'éventuels bruits susceptibles d'avoir perturbé les capteurs utilisés.

Ceci est possible en pratique puisque les calculs effectués à partir de ces mesures ne doivent pas être réalisés immédiatement en temps réel, mais peuvent être effectuées sans problème quelques secondes après les mesures.

Les angles $\Theta$ et $\phi$ peuvent donc être déduits à partir d'au moins deux des mesures accélérométriques $\Gamma x$, $\Gamma y$, $\Gamma z$ précisées ci-dessus.

En revanche, l'angle de cap $\psi$, tel que défini précédemment, ne peut pas être obtenu à partir de ces mesures accélérométriques, puisqu'il est formé dans un plan $(\overrightarrow{Nm}, \overrightarrow{Em})$ qui est perpendiculaire à l'accélération de la pesanteur colinéaire à l'axe $\overrightarrow{V}$.

Aussi, selon l'invention, on détermine l'angle de cap $\psi$ à l'aide d'un moyen de mesure approprié 3 de type connu, non décrit plus en détail dans la présente description.

En plus dudit moyen de mesure 3, le dispositif 1 conforme à l'invention comporte un moyen de mesure 4 pour déterminer la latitude $\lambda$ du point P, ainsi que des calculateurs 5 et 6.

Ledit calculateur 5 relié à la centrale inertielle 2 et auxdits moyens de mesure 3 et 4, respectivement par l'intermédiaire de liaisons 7, 8 et 9, reçoit de ces derniers les valeurs des angles $\Theta$, $\phi$ et $\psi$, ainsi que la valeur de la latitude $\lambda$. A partir de ces informations, ledit calculateur 5 calcule la vitesse de rotation $\omega_{cal}$ de la terre T dans le référentiel de mesure R1 à partir de la relation :

$$\omega_{cal} = \begin{pmatrix} \cos\Theta.\cos\psi.\omega.\cos\lambda + \sin\Theta.\omega.\sin\lambda \\ (\cos\psi.\sin\Theta.\sin\phi - \sin\psi.\cos\phi).\omega.\cos\lambda - \cos\Theta.\sin\phi.\omega.\sin\lambda \\ (\cos\phi.\sin\Theta.\cos\psi + \sin\phi.\sin\psi).\omega.\cos\lambda - \cos\phi.\cos\Theta.\omega.\sin\lambda \end{pmatrix}$$

Le calculateur 5 transmet ensuite le résultat obtenu au calculateur 6 par l'intermédiaire d'une liaison 10. Ce dernier calculateur 6, qui reçoit de plus, par l'intermédiaire d'une liaison 11, la vitesse de rotation de la terre $\omega_{mes}$ mesurée par les gyromètres de la centrale inertielle 2, calcule les biais gyrométriques b$\phi$, b$\Theta$ et b$\psi$ des angles $\phi$, $\Theta$ et $\psi$, en effectuant la soustraction entre $\omega_{mes}$ et $\omega_{cal}$. Lesdits biais gyrométriques vérifient en effet la relation suivante, à des facteurs d'échelle gyrométriques près :

$$\omega_{mes} - \omega_{cal} = \begin{pmatrix} b\phi \\ b\Theta \\ b\psi \end{pmatrix}$$

Le calculateur 6 peut transmettre le résultat obtenu par l'intermédiaire d'une liaison 12, par exemple à un système utilisateur non représenté ou à une mémoire également non représentée reliée à la centrale inertielle 2 et stockant ledit résultat, de manière à permettre la correction ultérieure de mesures gyrométriques de la centrale inertielle 2 au moyen des biais gyrométriques b$\phi$, b$\Theta$ et b$\psi$ ainsi stockés.

Dans un mode de réalisation préféré, les calculateurs 5 et 6 sont regroupés dans un calculateur unique 13.

Ainsi, grâce à l'invention, on peut utiliser des gyromètres à performance moyenne et de faible coût, puisqu'on est capable de corriger les erreurs de mesure qui sont, de façon connue, constituées essentiellement des biais gyrométriques déterminés par le procédé conforme à l'invention.

La présente invention est par conséquent particulièrement avantageuse :

- pour des aéronefs, par exemple des missiles, à centrale inertielle de faible coût, puisque les gyromètres sont les capteurs les plus coûteux de la centrale inertielle, ou
- pour des aéronefs à distance et à temps de vol élevés puisque, dans ce cas, les erreurs de mesure même minimes sont susceptibles d'être très dommageables car les mesures doivent être répétées sur une longue durée.

Des simulations ont par ailleurs montré que la précision des biais gyrométriques déterminés par le procédé conforme à l'invention dépend de la position initiale (immobile) de l'aéronef A, c'est-à-dire de l'angle d'assiette $\Theta$ (par exemple l'angle de la rampe de lancement d'un missile par rapport à l'horizontale), de l'angle de roulis $\phi$ et de l'angle de cap $\psi$ dudit aéronef A. Ces simulations ont montré que, pour obtenir la précision la plus élevée possible, il convient d'utiliser un angle d'assiette $\Theta$ important, par exemple 45°, et des angles de roulis $\phi$ et de cap $\psi$ les plus faibles possibles. On a pu vérifier en outre que les éventuelles erreurs de mesures des moyens de mesure 3 et 4 du type connu, dues à un défaut de précision et concernant donc l'angle de cap $\psi$ et la latitude $\lambda$, n'influent pas sur la précision des biais gyrométriques déterminés conformément à l'invention.

**Revendications**

1.  Procédé pour estimer les biais gyrométriques de mesures effectuées par un ensemble de gyromètres comportant au moins un gyromètre et monté sur un aéronef (A),
    caractérisé en ce que :

- on immobilise ledit aéronef (A) en un endroit déterminé (P) sur la terre (T) ;
- on détermine les angles d'assiette ($\Theta$), de roulis ($\phi$) et de cap ($\psi$) dudit aéronef (A) ainsi immobilisé ;
- on détermine la latitude ($\lambda$) dudit endroit déterminé (P) ;
- on calcule, à partir de ladite latitude ($\lambda$) et desdits angles d'assiette ($\Theta$), de roulis ($\phi$) et de cap ($\psi$), la vitesse de rotation de la terre (T) dans un référentiel de mesure (R1) lié audit aéronef (A) ;
- on mesure la vitesse de rotation de la terre dans ledit référentiel de mesure (R1) au moyen dudit ensemble de gyromètres ; et
- on effectue la soustraction entre la vitesse de rotation calculée et la vitesse de rotation mesurée, de manière à obtenir les valeurs estimées desdits biais gyrométriques.

2. Procédé selon la revendication 1,
caractérisé en ce que les angles d'assiette ($\Theta$) et de roulis ($\phi$) sont déterminés à partir de mesures accélérométriques effectuées sur l'aéronef (A).

3. Procédé selon la revendication 2, ledit référentiel de mesure (R1) correspondant à un référentiel OXYZ dans lequel :

- l'axe OX correspond à l'axe de l'aéronef (A),
- l'axe OY est perpendiculaire audit axe OX suivant les ailes (A1, A2) dudit aéronef (A), et
- l'axe OZ est perpendiculaire auxdits axes OX et OY,

caractérisé en ce qu'on détermine les angles d'assiette $\Theta$ et de roulis $\phi$ à partir d'au moins deux des trois relations suivantes :

$$\Gamma x = -g.\sin\Theta.(1+fx)$$

$$\Gamma y = g.\cos\Theta.\sin\phi.(1+fy)$$

$$\Gamma z = g.\cos\Theta.\cos\phi.(1+fz)$$

dans lesquelles :

- $\Gamma x$, $\Gamma y$ et $\Gamma z$ représentent des mesures accélérométriques effectuées par des accéléromètres respectivement selon les axes OX, OY et OZ,
- $\underline{g}$ représente l'accélération de la pesanteur, et
- fx, fy et fz représentent des facteurs d'échelle desdits accéléromètres.

4. Procédé selon l'une des revendications 2 ou 3, caractérisé en ce que lesdites mesures accélérométriques sont effectuées par des accéléromètres d'une centrale inertielle (2) montée sur l'aéronef (A).

5. Procédé selon l'une quelconque des revendications 1 à 4, caractérisé en ce qu'on détermine l'angle de cap ($\psi$) à partir de mesures effectuées par un moyen de mesure approprié (3) externe à la centrale inertielle (2) de l'aéronef (A).

6. Procédé selon l'une quelconque des revendications 1 à 5, caractérisé en ce qu'on calcule la vitesse de rotation $\omega_{cal}$ de la terre (T) dans le référentiel de mesure (R1) à partir de la relation :

$$\omega_{cal} = \begin{pmatrix} \cos\Theta.\cos\psi.\omega.\cos\lambda + \sin\Theta.\omega.\sin\lambda \\ (\cos\psi.\sin\Theta.\sin\phi - \sin\psi.\cos\phi).\omega.\cos\lambda - \cos\Theta.\sin\phi.\omega.\sin\lambda \\ (\cos\phi.\sin\Theta.\cos\psi + \sin\phi.\sin\psi).\omega.\cos\lambda - \cos\phi.\cos\Theta.\omega.\sin\lambda \end{pmatrix}$$

dans laquelle :

- $\lambda$ correspond à la latitude dudit point déterminé (P),
- $\Theta$, $\phi$ et $\psi$ représentent respectivement les angles d'assiette, de roulis et de cap, et
- $\omega$ représente la vitesse de rotation de la terre (T) autour de son axe de rotation (CC').

7. Procédé selon l'une quelconque des revendications 1 à 6, caractérisé en ce que ledit aéronef (A) est immobilisé à son poste de lancement.

8. Dispositif pour la mise en oeuvre du procédé spécifié sous l'une quelconque des revendications 1 à 7, ledit dispositif (1) étant associé à un ensemble de gyromètres comportant au moins un gyromètre et monté sur un aéronef (A), caractérisé en ce qu'il est associé à un système auxiliaire susceptible de déterminer les angles d'assiette ($\Theta$) et de roulis ($\phi$) de l'aéronef (A), et en ce qu'il comporte :

- un premier moyen de mesure (3) déterminant la latitude ($\lambda$) dudit endroit (P) déterminé de la terre (T) ;
- un second moyen de mesure (4) déterminant l'angle de cap ($\psi$) dudit aéronef (A) ;
- un premier calculateur (5) calculant la vitesse de rotation de la terre à partir d'informations reçues dudit système auxiliaire et desdits premier et second moyens de mesure (3, 4) ; et
- un second calculateur (6) déterminant les biais gyrométriques à partir d'informations reçues dudit premier calculateur (5) et dudit ensemble de gyromètres.

9. Dispositif selon la revendication 8,
caractérisé en ce que ledit système auxiliaire et ledit ensemble de gyromètres font partie de la centrale inertielle (2) de l'aéronef (A).

10. Dispositif selon la revendication 9,
caractérisé en ce que les valeurs des biais gyrométriques estimées par ledit dispositif (1) sont stockées dans une mémoire intégrée dans ladite centrale inertielle (2).

11. Dispositif selon l'une quelconque des revendications 8 à 10,
caractérisé en ce que lesdits premier et second calculateurs (5, 6) sont regroupés dans un calculateur unique (13).

**Claims**

1. Method for estimating the rate gyro biases of measurements taken by a set of rate gyros including at least one rate gyro and mounted on an aircraft (A), characterized in that:

- the said aircraft (A) is immobilized at a defined place (P) on the Earth (T);
- the angles of pitch ($\theta$), roll ($\phi$) and heading ($\psi$) of the said thus immobilized aircraft (A) are determined;
- the latitude ($\lambda$) of the said defined place (P) is determined;
- from the said latitude ($\lambda$) and from the said angles of pitch ($\theta$), roll ($\phi$) and heading ($\psi$), the speed of rotation of the Earth (T) is calculated in a measurement reference system (R1) related to the said aircraft (A) ;
- the speed of rotation of the Earth is measured in the said measurement reference system (R1) by means of the said set of rate gyros; and
- the calculated speed of rotation and the measured speed of rotation are subtracted, so as to obtain the estimated values of the said rate gyro biases.

2. Method according to Claim 1, characterized in that the angles of pitch ($\theta$) and roll ($\phi$) are determined from accelerometer measurements taken on the aircraft (A).

3. Method according to Claim 2, the said measurement reference system (R1) corresponding to an OXYZ reference system in which:

- the OX axis corresponds to the axis of the aircraft (A),
- the OY axis is perpendicular to the said OX axis along the wings (A1, A2) of the said aircraft (A), and
- the OZ axis is perpendicular to the said OX and OY axes,

characterized in that the angles of pitch $\theta$ and of roll $\phi$ are determined from at least two of the following three relationships:

$$\Gamma x = -g.\sin\theta.(1+fx)$$

$$\Gamma y = g.\cos\theta.\sin\phi(1+fy)$$

$$\Gamma z = g.\cos\theta.\cos\phi(1+fz)$$

in which:

- $\Gamma x$, $\Gamma y$ and $\Gamma z$ represent accelerometer measurements taken by accelerometers along the OX, OY and OZ axes respectively,
- $\underline{g}$ represents the acceleration due to gravity, and
- fx, fy and fz represent scale factors of the said accelerometers.

4. Method according to one of Claims 2 and 3, characterized in that the said accelerometer measurements are taken by accelerometers of an inertial unit (2) mounted on the aircraft (A).

5. Method according to any one of Claims 1 to 4, characterized in that the heading angle ($\psi$) is determined on the basis of measurements taken by an appropriate measurement means (3) external to the inertial unit (2) of the aircraft (A).

6. Method according to any one of Claims 1 to 5, characterized in that the speed of rotation $\omega_{cal}$ of the Earth (T) in the measurement reference system (R1) is calculated on the basis of the relationship:

$$\omega_{cal} = \begin{pmatrix} \cos\theta.\cos\psi.\omega.\cos\lambda + \sin\theta.\omega.\sin\lambda \\ (\cos\psi.\sin\theta.\sin\phi - \sin\psi.\cos\phi).\omega. \quad \cos\lambda - \cos\theta.\sin\phi.\omega.\sin\lambda \\ (\cos\phi.\sin\theta.\cos\psi + \sin\phi.\sin\psi).\omega. \quad \cos\lambda - \cos\phi.\cos\theta.\omega.\sin\lambda \end{pmatrix}$$

in which:

- $\lambda$ corresponds to the latitude of the said defined point (P),
- $\theta$, $\phi$ and $\psi$ represent the pitch, roll and heading angles respectively, and
- $\omega$ represents the speed of rotation of the Earth (T) about its axis of rotation (CC').

7. Method according to any one of Claims 1 to 6, characterized in that the said aircraft (A) is immobilized at its launch post.

8. Device for implementing the method specified under any one of Claims 1 to 7, the said device (1) being associated with a set of rate gyros including at least one rate gyro and mounted on an aircraft (A), characterized in that it is associated with an auxiliary system capable of determining the pitch ($\theta$) and roll ($\phi$) angles of the aircraft (A), and in that it includes:

- a first measurement means (3) determining the latitude ($\lambda$) of the said defined place (P) on the Earth (T);
- a second measurement means (4) determining the heading angle ($\psi$) of the said aircraft (A);
- a first computer (5) calculating the speed of rotation of the Earth from information received from the said auxiliary system and from the said first and second measurement means (3, 4); and
- a second computer (6) determining the rate gyro biases from information received from the said first computer (5) and from the said set of rate gyros.

9. Device according to Claim 8, characterized in that the said auxiliary system and the said set of rate gyros form part of the inertial unit (2) of the aircraft (A) .

10. Device according to Claim 9, characterized in that the values of the rate gyro biases estimated by the said device (1) are stored in a memory incorporated in the said inertial unit (2).

11. Device according to any one of Claims 8 to 10, characterized in that the said first and second computers (5, 6) are grouped together into a single computer (13).

**Patentansprüche**

1. Verfahren zum Schätzen der gyrometrischen Nullpunktabweichungen von Messungen, die mit einem Kreiselsystem mit mindestens einem Kreisel, das an einem Luftfahrzeug (A) angebracht ist, durchgeführt werden, dadurch gekennzeichnet, daß:

   - das Luftfahrzeug (A) an einer bestimmten Stelle (P) auf der Erde (T) stillgesetzt wird;
   - der Trimmwinkel ($\theta$), der Rollwinkel ($\phi$) und der Kurswinkel ($\psi$) des so stillgesetzten Luftfahrzeugs (A) bestimmt werden;
   - die geographische Breite ($\lambda$) der so bestimmten Stelle (P) bestimmt wird;
   - aus der geographischen Breite ($\lambda$) und dem Trimmwinkel ($\theta$), dem Rollwinkel ($\phi$) und dem Kurswinkel ($\psi$) in einem mit dem Luftfahrzeug (A) verbundenen Meßbezugssystem (R1) die Rotationsgeschwindigkeit der Erde (T) errechnet wird;
   - die Rotationsgeschwindigkeit der Erde im Meßbezugssystem (R1) mit Hilfe des Kreiselsystems gemessen wird und
   - zwischen der errechneten Rotationsgeschwindigkeit und der gemessenen Rotationsgeschwindigkeit subtrahiert wird, so daß sich die geschätzten Werte der gyrometrischen Nullpunktabweichungen ergeben.

2. Verfahren nach Anspruch 1,
   dadurch gekennzeichnet, daß der Trimmwinkel ($\theta$) und der Rollwinkel ($\phi$) aus Beschleunigungsmessungen am Luftfahrzeug (A) bestimmt werden.

3. Verfahren nach Anspruch 2, wobei das Meßbezugssystem (R1) einem OXYZ-Bezugssystem entspricht, in dem:

   - die OX-Achse der Achse des Luftfahrzeugs (A) entspricht,
   - die OY-Achse senkrecht zur OX-Achse entsprechend den Flügeln (A1, A2) des Luftfahrzeugs (A) verläuft und
   - die OZ-Achse senkrecht zur OX- und zur OY-Achse verläuft,

   dadurch gekennzeichnet, daß der Trimmwinkel $\theta$ und der Rollwinkel $\phi$ aus mindestens zwei der folgenden drei Beziehungen bestimmt werden:

$$\Gamma x = -g.\sin\theta.(1+fx)$$

$$\Gamma y = g.\cos\theta.\sin\phi.(1+fy)$$

$$\Gamma z = g.\cos\theta.\cos\phi.(1+fz)$$

   in denen:

   - $\Gamma x$, $\Gamma y$ und $\Gamma z$ Beschleunigungsmessungen der Beschleunigungsmesser nach den Achsen OX, OY bzw. OZ darstellen,
   - $\underline{g}$ die Erdbeschleunigung ist und
   - fx, fy und fz Skalenfaktoren der Beschleunigungsmesser darstellen.

4. Verfahren nach einem der Ansprüche 2 oder 3,
   dadurch gekennzeichnet, daß die Beschleunigungsmessungen durch Beschleunigungsmesser einer am Luftfahrzeug (A) angebrachten Trägheitsanlage (2) erfolgen.

**5.** Verfahren nach einem der Ansprüche 1 bis 4,
dadurch gekennzeichnet, daß der Kurswinkel ($\psi$) aus Messungen eines geeigneten Meßmittels (3) außerhalb der Trägheitsanlage (2) des Luftfahrzeugs (A) bestimmt wird.

**6.** Verfahren nach einem der Ansprüche 1 bis 5,
dadurch gekennzeichnet, daß die Rotationsgeschwindigkeit $\omega_{cal}$ der Erde (T) im Meßbezugssystem (R1) nach der Beziehung:

$$\omega_{cal} = \begin{pmatrix} \cos\theta.\cos\psi.\omega.\cos\lambda+\sin\theta.\omega.\sin\lambda \\ (\cos\psi.\sin\theta.\sin\phi-\sin\psi.\cos\phi).\omega.\cos\lambda-\cos\theta.\sin\phi.\omega.\sin\lambda \\ (\cos\phi.\sin\theta.\cos\psi+\sin\phi.\sin\psi).\omega.\cos\lambda-\cos\phi.\cos\theta.\omega.\sin\lambda \end{pmatrix}$$

errechnet wird, in der:

- $\lambda$ der geographischen Breite des bestimmten Punktes (P) entspricht,
- $\theta$, $\phi$ und $\psi$ den Trimm-, Roll- bzw. Kurswinkel darstellen und
- $\omega$ die Rotationsgeschwindigkeit der Erde (T) um ihre Rotationsachse (CC') ist.

**7.** Verfahren nach einem der Ansprüche 1 bis 6,
dadurch gekennzeichnet, daß das Luftfahrzeug (A) an seiner Startstelle stillgesetzt wird.

**8.** Vorrichtung zur Anwendung des unter einem der Ansprüche 1 bis 7 aufgeführten Verfahrens, wobei die Vorrichtung (1) mit einem Kreiselsystem mit mindestens einem Kreisel verbunden ist, das an einem Luftfahrzeug (A) angebracht ist,
dadurch gekennzeichnet, daß sie mit einem Hilfssystem verbunden ist, das den Trimmwinkel ($\theta$) und den Rollwinkel ($\phi$) des Luftfahrzeugs (A) bestimmen kann, und dadurch, daß sie umfaßt:

- ein erstes Meßmittel (3) zur Bestimmung der geographischen Breite ($\lambda$) der bestimmten Stelle (P) der Erde (T);
- ein zweites Meßmittel (4) zur Bestimmung des Kurswinkels ($\psi$) des Luftfahrzeugs (A);
- einen ersten Rechner (5) zur Berechnung der Rotationsgeschwindigkeit der Erde nach Informationen aus dem Hilfssystem und aus dem ersten und zweiten Meßmittel (3, 4); und
- einen zweiten Rechner (6) zur Bestimmung der gyrometrischen Nullpunktabweichungen nach Informationen aus dem ersten Rechner (5) und aus dem Kreiselsystem.

**9.** Vorrichtung nach Anspruch 8,
dadurch gekennzeichnet, daß das Hilfssystem und das Kreiselsystem zur Trägheitsanlage (2) des Luftfahrzeugs (A) gehören.

**10.** Vorrichtung nach Anspruch 9,
dadurch gekennzeichnet, daß die von der Vorrichtung (1) geschätzten Werte der gyrometrischen Nullpunktabweichungen in einem Speicher innerhalb der Trägheitsanlage (2) gespeichert werden.

**11.** Vorrichtung nach einem der Ansprüche 8 bis 10,
dadurch gekennzeichnet, daß der erste und zweite Rechner (5, 6) zu einem einzigen Rechner (13) zusammengefaßt sind.

# FIG.1

# FIG.4

## FIG.2

## FIG.3